# EUROPÄISCHE PATENTSCHRIFT

(11) **EP 2 994 716 B1**
(45) Veröffentlichungstag und Bekanntmachung des Hinweises auf die Patenterteilung: **01.12.2021**
(21) Anmeldenummer: 14718399.0
(22) Anmeldetag: 16.04.2014
(51) Int. Cl.: G01B 11/02

(54) **VERFAHREN UND VORRICHTUNG ZUR CHROMATISCH-KONFOKALEN MEHRPUNKTMESSUNG SOWIE DEREN VERWENDUNG**
CHROMATIC CONFOCAL MULTI-POINT MEASUREMENT METHOD AND DEVICE AND USE OF SAID DEVICE
PROCÉDÉ ET DISPOSITIF DE MESURE MULTIPOINT CONFOCALE CHROMATIQUE ET UTILISATION ASSOCIÉE

(30) Priorität: 08.05.2013 DE 102013008582
(43) Veröffentlichungstag der Anmeldung: 16.03.2016
(73) Patentinhaber: Technische Universität Ilmenau, 98683 Ilmenau (DE)
(72) Erfinder: HILLENBRAND, Matthias, 98693 Ilmenau (DE); LORENZ, Lucia, 98693 Ilmenau (DE); SINZINGER, Stefan, 98693 Ilmenau (DE); BICHRA, Mohamed, 98716 Elgersburg (DE); KLEINDIENST, Roman, 99425 Weimar (DE)
(74) Vertreter: Liedtke, Markus
(86) Internationale Anmeldenummer: PCT/EP2014/057811
(87) Internationale Veröffentlichungsnummer: WO 2014/180642

(56) Entgegenhaltungen:
- WO-A1-99/56159
- WO-A2-2009/153067
- WO-A2-2011/044301
- DE-A1-102008 020 902
- US-A1- 2012 105 859

## Beschreibung

Die vorliegende Erfindung betrifft ein Verfahren und eine Vorrichtung zur chromatisch-konfokalen Mehrpunktmessung sowie deren Verwendung.

Bei einem chromatisch konfokalen Messverfahren handelt es sich um ein verbreitetes Verfahren zur berührungslosen optischen Abstandsmessung. Das Grundprinzip basiert auf der von Marvin Minski in der US 3,013,467 vorgeschlagenen konfokalen Mikroskopie. Anstelle eines hinsichtlich des Farblängsfehlers korrigierten Objektivs wird jedoch ein hyperchromatisches optisches System eingesetzt, das jede spektrale Komponente einer breitbandigen Strahlungsquelle in einem unterschiedlichen Abstand zum Sensor fokussiert. Im Gegensatz zur monochromatischen konfokalen Mikroskopie, die einen Tiefenscan erfordert, werden bei der chromatisch konfokalen Abstandsmessung alle Tiefenwerte gleichzeitig erfasst.

Besonders etabliert sind chromatisch konfokale Punktsensoren, die lediglich einen Messpunkt auswerten (z.B. WO 96/41123, WO 2009/048808, EP 2500685 A1, EP 2 447 754 A1, EP 2 369 294 A1, EP 2 278 268 A2, DE 10 2004 011 189 A1, DE 10 2004 022 454 A1). Anstelle der Beleuchtungs- und Detektionslochblenden werden bei einigen dieser Punktsensoren optische Fasern eingesetzt, deren Austrittsöffnung als gemeinsame Beleuchtungs- und Detektionslochblende fungiert. Durch diese Anordnung sind besonders robuste und kompakte Sensorsysteme realisierbar, bei denen der optische Messkopf von der Lichtquelle und der Signalauswerteeinheit räumlich getrennt angeordnet sein kann. Die verschiedenen optischen Komponenten sind in diesem Fall nur über optische Fasern und geeignete Faserkoppler verbunden.

Eine Möglichkeit der Mehrpunktmessung besteht im sequentiellen Abtasten des Messobjektes mit Hilfe von Scansystemen, wie sie z.B. in der DE 10 2006 019 384 A1, DE 10 2008 017 481 A1 und DE 10 2009 001 086 A1 vorgeschlagen wurden. Dabei ist jedoch nachteilig, dass die sequentielle Messung mit erheblichen Steigerungen der Messzeiten im Vergleich zur Einzelpunktmessung verbunden ist.

Für das gleichzeitige Erfassen mehrerer Messpunkte wird in der DE 101 61 486 A1 ein System vorgeschlagen, das mehrere räumliche Kanäle in einem kompakten mehrkanaligen Messkopf zusammenführt. Die einzelnen Kanäle werden unabhängig voneinander ausgewertet.

In den US 2010/097693 A1 und US 2010/188742 werden Sensoranordnungen beschrieben, die mit Hilfe von Schlitzblenden anstelle der Lochblenden eine eindimensionale Linie erfassen. Im Vergleich zu Lochblenden weisen Schlitzblendensysteme jedoch ein geringeres spektrales Diskriminierungsverhalten auf. Gleichzeitig erfordert die parallele spektrale Auswertung zweidimensionale Detektoren, die im Vergleich zu eindimensionalen Detektoren über eine wesentlich geringere Bildrate verfügen.

Zweidimensionale Detektoren finden auch in den im Folgenden genannten chromatisch-konfokalen Systemen zur parallelisierten Mehrpunktmessung Anwendung: In der DE 10 2005 043 627 A werden anstelle der einzelnen Lochblenden eines Punktsensors zweidimensionale Lochblendenarrays eingesetzt. Die einzelnen Kanäle werden räumlich voneinander getrennt durch Mikrolinsenarrays abgebildet. In den DE 10 2006 007 170 A1 und DE10 2007 019 267 A1 werden die zweidimensionalen Lochblendenarrays hingegen über gemeinsame Linsengruppen abgebildet, wobei die einzelnen Lochblenden jeweils einem anderen Feldpunkt des Messsystems zugeordnet sind. In den DE196 12 846 A1 und DE 200 10 830 U1 werden anstelle der starren Lochblenden rotierende Nipkow-Scheiben eingesetzt. In der DE 102 006 026 775 A1 wird eine einzelne Messzeile mit Mikrolinsen erzeugt und mit Hilfe eines zweidimensionalen Arraydetektors ausgewertet. In den DE 11 2008 002 244 T5, US 2012/019821 und DE 10 2009 025 815 A1 werden mehrere Fasern eingesetzt, um die an mehreren Messpunkten parallel erfassten Signale in günstiger Form auf einen zweidimensionalen Detektor umzulenken. Die Messgeschwindigkeit dieser Mehrkanalsysteme ist durch die Bildrate des zweidimensionalen Arraydetektors limitiert.

Das Dokument US 2012/0105859 A1 beschreibt eine optische Messvorrichtung mit einer Lichtquelle, einem linearen Polarisator, einem Polarisationstrahlteiler, einer Viertelwellenplatte, einer Objektivlinse und/oder einem Lichtempfänger. Die Objektivlinse kann so konfiguriert sein, dass Licht unterschiedlicher Wellenlänge mittels chromatischer Aberrationen aus zirkularpolarisiertem Licht der Viertelwellenplatte erzeugt werden kann.

Das Dokument WO 2009/153067 A2 beschreibt eine Vorrichtung zur Abstandsmessung umfassend eine erste Lichtquelle mit einem ersten polychromatischen Spektrum und eine zweite Lichtquelle mit einem zweiten polychromatischen Spektrum. Mittels einer Auswerteeinheit wird die Wellenlänge reflektierten Lichts aus gemessenen Intensitäten unter Berücksichtigung des ersten und des zweiten polychromatischen Spektrums ermittelt. Aus der Wellenlänge wird der Abstand des reflektierenden Punktes an einem Messobjekt ermittelt.

Das Dokument DE 10 2008 020 902 A1 beschreibt eine Anordnung und ein Verfahren zur konfokalen spektralen Zweistrahl-Interferometrie zur Objekt-Abstandserfassung in der mikroskopischen Skala.

Das Dokument WO 99/56159 A1 beschreibt eine Anordnung und ein Verfahren zur Anwendung einer vorbestimmten komplexwertigen spektralen Übertragungsfunktion auf ein optisches Eingangsfeld zur Erzeugung eines optischen Ausgangsfeldes und deren Anwendung in Kommunikationssystemen.

Das Dokument WO 2011/044301 A2 beschreibt eine Vorrichtung und ein Verfahren zur Abbildung bestimmter Zellen, einschließlich eosinophiler Zellen. Mittels einer ersten Vorrichtung wird eine erste elektromagnetische Strahlung mindestens auf einen Gewebeabschnitt innerhalb eines Körpers gebracht. Mittels einer zweiten Vorrichtung wird eine zweite elektromagnetische Strahlung von dem Gewebeabschnitt empfangen, welche auf der ersten elektromagnetischen Strahlung basiert. Mittels einer dritten Vorrichtung wird eine besondere Zelle, die eosinophil, basophil, monozytisch, nutrophil und/oder eine Mastzelle ist, anhand der zweiten elektromagnetischen Strahlung von anderen Zellen des Gewebeabschnitts unterschieden.

Aufgabe der vorliegenden Erfindung ist es, die Nachteile aus dem Stand der Technik zu überwinden und ein robustes, hochdynamisches Verfahren zur chromatisch-konfokalen parallelisierten Mehrpunktmessung und eine dazugehörige Vorrichtung sowie deren Verwendung bereitzustellen.

Erfindungsgemäß wird diese Aufgabe verfahrensseitig durch die Merkmale des ersten Patentanspruchs und vorrichtungsseitig durch die Merkmale des fünften Patentanspruchs gelöst. Hinsichtlich der Verwendung von Vorrichtungen wird die Aufgabe erfindungsgemäß durch die Merkmale des zehnten Patentanspruchs gelöst.

Bevorzugte weitere Ausgestaltungen des erfindungsgemäßen Verfahrens sind in den Patentansprüchen 2 bis 4 gekennzeichnet, während bevorzugte weitere Ausgestaltungen der erfindungsgemäßen Vorrichtung in den Patentansprüchen 6 bis 9 angegeben sind.

Weitere Einzelheiten und Vorteile der Erfindung sind dem nachfolgenden beschreibungsteil zu entnehmen, in dem die Erfindung unter Bezugnahme auf die beigefügten Zeichnungen näher erläutert wird. Es zeigt:
- Figur 1: ein erstes Ausführungsbeispiel der erfindungsgemäßen Vorrichtung
- Figur 2: ein erstes Ausführungsbeispiel eines segmentierten optischen Elements
- Figur 3: die spektrale Strahlungsleistung bei Verwendung eines ebenen, reflektierenden Messobjektes in dem Ausführungsbeispiel nach Figur 1
- Figur 4: ein zweites Ausführungsbeispiel der erfindungsgemäßen Vorrichtung
- Figur 5: ein zweites Ausführungsbeispiel eines segmentierten optischen Elements.

Erfindungsgemäß wird ein chromatisch-konfokaler Sensor eingesetzt, bei dem jedem Messpunkt ein unterschiedlicher Teilbereich der gesamten spektralen Bandbreite des Messsystems zugeordnet ist. Dieses spektrale Multiplexverfahren ermöglicht es beispielsweise, das Signal von mehreren Messpunkten parallel über eine optische Faser zu übertragen und mit Hilfe einer eindimensionalen Detektorzeile auszuwerten. Die Verknüpfung der verschiedenen Teilbereiche des Spektrums mit den unterschiedlichen Messpunkten erfolgt vorzugsweise über ein spezielles optisches System, das auch als Ergänzungselement zu einem chromatisch konfokalen Punktsensor ausgeführt sein kann.

Die Erfindung basiert auf dem bekannten Grundprinzip der chromatisch-konfokalen Abstandsmessung. Dieses Grundprinzip wird im Folgenden kurz zusammengefasst, bevor die Modifikationen für die erfindungsgemäße Mehrpunktmessung erläutert werden.

Durch die Kombination einer spektral breitbandigen Lichtquelle mit einer Beleuchtungslochblende wird eine nahezu punktförmige Strahlungsquelle erzeugt. Die von dieser ausgehenden Strahlung trifft auf ein hyperchromatisches optisches System, das jede spektrale Komponente in einem unterschiedlichen Abstand zum Sensor fokussiert und somit im Objektraum eine spektrale Linie erzeugt. Für diese existiert eine direkte Zuordnung zwischen der Wellenlänge und dem Abstand zum Sensor. Wird ein Messobjekt in den Messbereich des Sensors gebracht, ist nur eine einzelne spektrale Komponente auf der Oberfläche des Messobjektes fokussiert. Die vom Messobjekt gestreute bzw. reflektierte Strahlung durchläuft das hyperchromatische optische System ein zweites Mal und trifft auf die Detektionslochblende. Im Sinne des konfokalen Aufbaus befinden sich die Beleuchtungslochblende, die Detektionslochblende und die den spektralen Komponenten im Objektraum zugeordneten Foki in optisch konjugierten Ebenen. Nur die auf dem Messobjekt fokussierte spektrale Komponente ist auch auf der Detektionslochblende fokussiert und durchläuft diese mit den geringsten Verlusten. Alle anderen spektralen Komponenten werden defokussiert auf die Ebene der Detektionslochblende abgebildet und unterliegen einer starken Absorption. Folglich weist die die Detektionslochblende passierende spektrale Strahlungsleistung ein Maximum für die auf der Oberfläche des Messobjekts fokussierte Wellenlänge auf. Der Beleuchtungs- und der Detektionsstrahlengang können z.B. mit Hilfe eines Strahlteilers voneinander getrennt werden. Durch die Bestimmung der Wellenlänge des Maximums kann direkt auf den Abstand zwischen Sensor und Messobjekt geschlossen werden. Hierfür können beispielsweise Spektrometer eingesetzt werden. Im Gegensatz zu konfokalen Abstandssensoren mit monochromatischer Beleuchtung entfällt die Scanbewegung in Lichtrichtung, da der komplette Messbereich des Sensors parallel ausgewertet wird.

Für eine erfindungsgemäße parallele chromatisch-konfokale Mehrpunktmessung wird jedem Messpunkt ein spektrales Teilband der gesamten spektralen Bandbreite des Sensorsystems zugewiesen. Durch dieses spektrale Multiplexen können die chromatisch kodierten Abstandswerte mehrerer Messpunkte über einen einzelnen, breitbandigen optischen Kanal zur Detektionseinheit übertragen werden. Die Detektionseinheit wertet die spektrale Strahlungsstärke des rücklaufenden Signals aus und ermittelt die Maxima in den einzelnen spektralen Teilbändern. Sofern für jeden Messkanal eine Zuordnung zwischen Wellenlänge und Arbeitsabstand zum Beispiel in Form einer Kalibrationskurve hinterlegt ist, kann aus der Position der spektralen Maxima direkt auf die Arbeitsabstände an den einzelnen Messpunkten geschlossen werden.

Die Zahl der spektralen Kanäle und Messpunkte ist anwendungsspezifisch wählbar. Hierbei ist zu beachten, dass die Zahl der jedem Messpunkt zugeordneten Detektorpixel und somit auch die axiale Auflösung mit einer steigenden Anzahl an parallel ausgewerteten Messpunkten sinken.

Die Aufteilung der spektralen Teilbänder auf die einzelnen Messpunkte wird durch spezielle optische Subsysteme bzw. Komponenten realisiert. Es können sowohl geometrische als auch physikalische Strahlteilungsprinzipien zum Einsatz kommen, wobei letztere auch wellenlängenselektiv z.B. in Form von dichroitischen Spiegeln oder Tief-, Band- und Hochpassfiltern realisiert werden können. Je nach Realisierungsvariante besitzt jeder einem bestimmten Messpunkt zugeordnete Kanal eine unterschiedliche Brennweite.

Anstelle der Beleuchtungs- und der Detektionslochblende können Lichtleitfasern eingesetzt werden. Ein besonders robustes Sensorsystem ergibt sich in diesem Fall, wenn die Beleuchtungs- und Detektionsfasern über einen y-Koppler mit einer gemeinsam genutzten Faser verbunden werden, die gleichzeitig als Beleuchtungs- und Detektionslochblende dient.

Aufgrund der verfügbaren Lichtquellen und Detektoren bietet sich insbesondere die Verwendung breitbandiger Strahlung im sichtbaren, im UV sowie im IR-Bereich an. Prinzipiell kann das Messsystem aber auch auf anderen Formen breitbandiger elektromagnetischer Strahlung basieren.

Die Erfindung umfasst eine Vielzahl von Ausführungsformen parallelisierter chromatisch-konfokaler Mehrpunktsensoren. Neben speziell ausgelegten Mehrpunktsensoren sind so auch Ergänzungselemente zu bestehenden chromatisch-konfokalen Punktsensoren realisierbar, die auf der hyperchromatischen Wirkung des Punktsensors aufbauen und die Funktionalität der Mehrpunktmessung z.B. mit Hilfe eines segmentierten optischen Elements hinzufügen.

Um einen noch höheren Parallelisierungsgrad bei gleichzeitig hoher Messgeschwindigkeit und hoher axialer Auflösung zu erreichen, ist es ferner möglich, das vorgestellte Grundprinzip um weitere Beleuchtungs- und Detektionseinheiten zu erweitern, die in einem gemeinsamen Sensorkopf zusammengeführt werden. Verfügt z.B. jede dieser Detektionseinheiten über vier gleichzeitig ausgewertete Messpunkte, können durch das Zusammenschalten von beispielsweise drei dieser Einheiten 12 Messpunkte gleichzeitig erfasst werden.

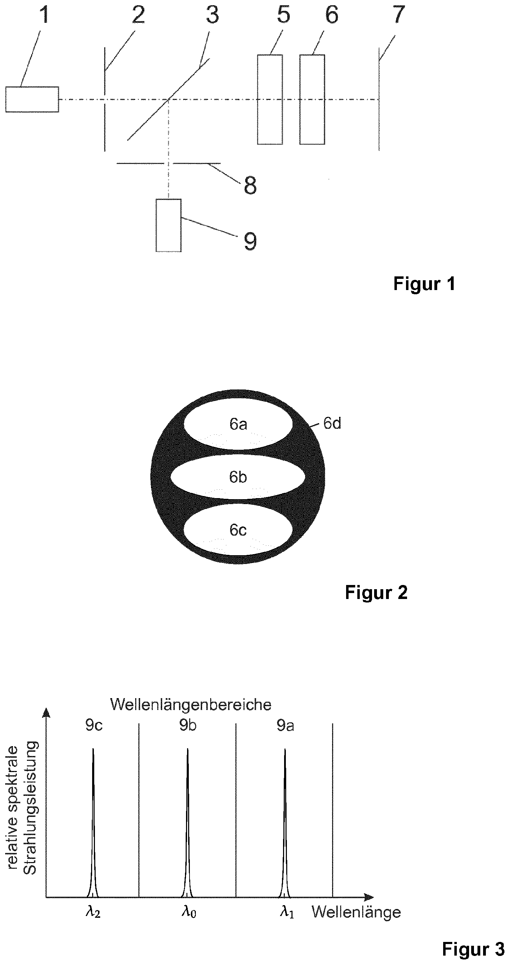

Figur 1 zeigt ein erstes Ausführungsbeispiel eines erfindungsgemäßen chromatisch-konfokalen Mehrpunktsensors. Das Licht einer polychromatischen Lichtquelle (1) im visuellen Bereich durchläuft eine Beleuchtungslochblende (2) und einen Strahlteiler (3). Hinter dem Strahlteiler wird das Lichtbündel mit Hilfe einer asphärischen Linse (5) kollimiert und trifft anschließend auf ein segmentiertes diffraktives optisches Element (DOE) (6). Dieses DOE verfügt beispielsweise über drei Segmente. Ein mögliche Gestaltungsvariante dieses DOEs ist in Figur 2 dargestellt.

Jedes der drei Segmente (6a), (6b) und (6c) wird für die Erzeugung jeweils eines Messpunktes genutzt. Die optisch nicht genutzten Bereiche (6d) sind absorbierend ausgeführt. Das spektrale Multiplexverfahren wird dadurch realisiert, dass jedes Segment eine unterschiedliche Brennweite besitzt. Die drei einzelnen Segmente des diffraktiven Elements (6a), (6b) und (6c) werden gleichzeitig zur Erzeugung des für das chromatisch-konfokale Messprinzip nötigen Farblängsfehlers genutzt. Durch die Kombination des Farblängsfehlers mit den unterschiedlichen Brennweiten der einzelnen Segmente ist an jedem Messpunkt eine andere Wellenlänge auf der Oberfläche des Messobjekts (7) fokussiert. Nachdem die von der Messoberfläche reflektierten Lichtbündel das segmentierte diffraktive Element (6) und die Linse (5) ein zweites Mal passiert haben, treffen sie nach einer Ablenkung durch den Strahlteiler (3) auf die Detektionslochblende (8). Die spektralen Lichtanteile, die auch auf der Oberfläche des Messobjekts (7) fokussiert sind, sind auch auf der Detektionslochblende fokussiert. Alle anderen spektralen Anteile sind defokussiert und werden durch die Detektionslochblende (8) teilweise abgeschattet. Für die auf der Oberfläche des Messobjekts fokussierten spektralen Anteile entsteht jeweils ein Maximum des spektralen Signals, das mit Hilfe des Spektrometers (9) ausgewertet werden kann.

Figur 3 zeigt die erwartete spektrale Strahlungsleistung für das ebene, reflektierende Messobjekt (7) in Figur 1. Dabei ist der Wellenlängenbereich (9a) dem Segment (6a), der Bereich (9b) dem Segment (6b) und der Bereich (9c) dem Segment (6c) zugeordnet. Der Rückschluss von den Wellenlängen maximaler Intensität auf die Messabstände erfolgt nach vorher aufgenommenen Kalibrationskurven.

Für jeden Messpunkt ist ein bestimmter Spektralbereich der gesamten spektralen Bandbreite des Messsystems reserviert. Die spektrale Gesamtbandbreite des Sensorsystems ist so aufgeteilt, dass alle drei Segmente annähernd den gleichen Messabstand und Messbereich aufweisen. Um Wechselwirkungen zwischen den einzelnen Messpunkten auszuschließen, kann zusätzlich ein segmentiertes, wellenlängenselektives Filterelement in den Strahlengang eingebracht werden, das nur die den einzelnen Segmenten des DOEs (6) zugeordneten Spektralbänder transmittiert.

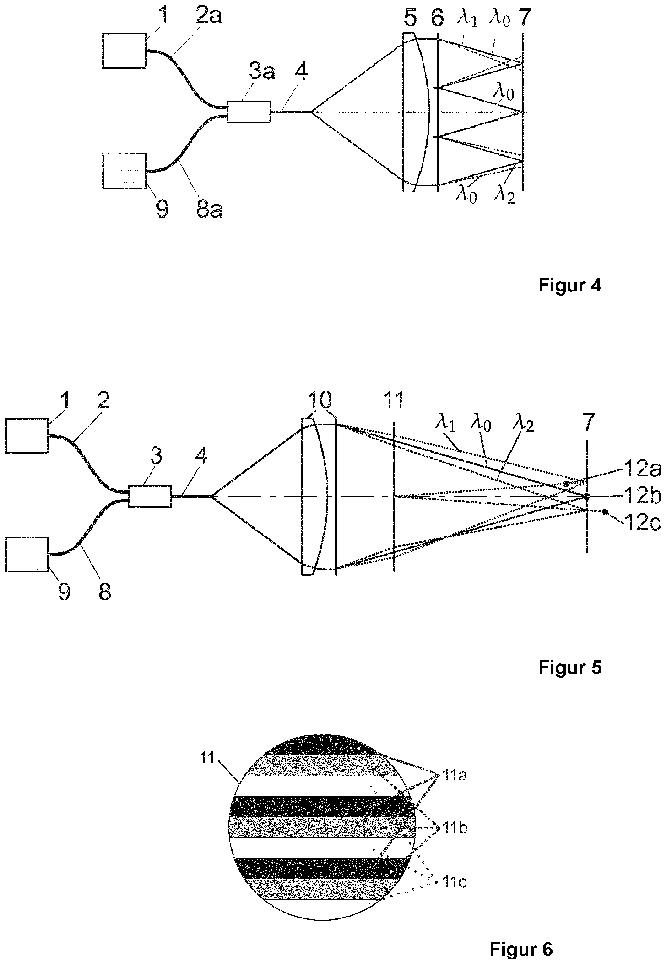

Figur 4 zeigt eine alternative, fasergekoppelte Lösung. Anstelle der Beleuchtungslochblende (2), des Strahlteilers (3) und der Detektionslochblende (8) wird in diesem Fall ein fasergebundenes Teilsystem eingesetzt, das aus einer Beleuchtungsfaser (2a), einem Faserkoppler (3a), einer Detektionsfaser (8a) und einem gemeinsam genutzten Faserabschnitt (4) besteht. In diesem Fall fungiert das der Komponente (5) zugewandte Ende des gemeinsamen Faserabschnitts (4) sowohl als Beleuchtungs- als auch als Detektionslochblende.

Figur 5 zeigt ein zweites Ausführungsbeispiel der erfindungsgemäßen Vorrichtung mit einem diffraktiven Ergänzungselement zu einem bestehenden chromatisch-konfokalen Punktsensor. Gegenüber dem ersten Ausführungsbeispiel bestehen folgende Unterschiede: Die Komponenten (5) und (6) werden durch die Komponente (10) ersetzt. Bei Komponente (10) handelt es sich um das rotationssymmetrische hyperchromatische Objektiv eines chromatisch-konfokalen Punktsensors. Um eine auf dem spektralen Multiplexverfahren basierende Mehrpunktmessung zu realisieren, wird zusätzlich ein spezielles diffraktives Element (11) in den Strahlengang gebracht. Ähnlich wie im ersten Ausführungsbeispiel wird das spektrale Multiplexverfahren dadurch umgesetzt, dass das Gesamtsystem aus Hyperchromat und Zusatzelement für jeden Messpunkt eine unterschiedliche Brennweite aufweist. Für die Verschiebung der oberen und unteren Messpunkte werden durch das Element (11) zusätzlich lineare Phasen aufgeprägt. Eine mögliche Ausführungsform des Elements (11) ist in Figur 5 dargestellt. Für jeden Messpunkt wurde eine Zonengruppe (11a), (11b) und (11c) definiert. Die Zonen der Gruppe (11a) kombinieren eine positive Linsenwirkung mit einer positiven linearen Phase, die der Gruppe (11b) haben lediglich die Funktion einer Aberrationskorrektur, während die Zonen der Gruppe (11c) eine negative Linsenwirkung mit einer negativen linearen Phase verbinden. Eine mögliche Zoneneinteilung für das Element (11) ist in Figur 6 dargestellt. Nach Durchlaufen des Ergänzungselementes (11) entstehen für die Referenzwellenlänge *λ*₀ drei räumlich getrennte Messpunkte (12a), (12b) und (12c) in unterschiedlichen axialen Abständen zum Sensor. Wird ein planes, reflektierendes Messobjekt (7) in den Messbereich des Sensors gebracht, sind entlang der drei chromatischen Messlinien unterschiedliche Wellenlängen auf der Oberfläche des Messobjektes fokussiert. Diese speziellen Wellenlängen werden wie im Ausführungsbeispiel nach Figur 4 bevorzugt in den gemeinsamen Faserabschnitt (4) und über den Faserkoppler (3) in den die Detektionsfaser (8a) und das Spektrometer (9) zurückgekoppelt. Wie in der ersten Ausführungsvariante kann über die Bestimmung der spektralen Maxima und eine vorangehende Kalibrierung auf die Objektabstände zurückgeschlossen werden.

Die erfindungsgemäße Lösung verbindet die Vorteile der parallelen Mehrpunktmessung mit der Dynamik, der Robustheit und Flexibilität eines fasergekoppelten Punktsensors, da eindimensionale Detektorarrays in der Regel wesentlich höhere Bildraten als zweidimensionale Detektorarrays erlauben. Gegenüber der parallelen Verwendung mehrerer parallel betriebener Punktsensoren zeichnet sich die Erfindung durch einen deutlich geringeren Platzbedarf und eine deutliche Kostenersparnis aus. Damit ist sie besonders gut für eingeengte industrielle Messumgebungen geeignet.

Neben der reinen Abstandsmessung ist die Erfindung auch für die Dickenmessung an transparenten oder teiltransparenten Schichten und Schichtsystemen geeignet. Durch eine Messung in definierten Zeitintervallen können ferner auch Geschwindigkeitsmessungen durchgeführt werden. Einen weiteren möglichen Einsatzbereich stellen ophthalmologische Messaufgaben dar. Durch die Kombination der Messanordnung mit einem optischen oder mechanischen Scanvorgang ist ferner eine parallelisierte dreidimensionale Topografieerfassung realisierbar.

### Bezugszeichenliste

- 1: spektral breitbandige Strahlungsquelle
- 2: Beleuchtungslochblende
- 2a: Beleuchtungsfaser
- 3: Strahlteiler
- 3a: Faserkoppler
- 4: gemeinsam genutzter Faserabschnitt mit kombinierter Beleuchtungs-Detektionslochblende
- 5: hyperchromatisches optisches System
- 6: segmentiertes optisches Element
- 6a, 6b, 6c: einzelne Segmente
- 7: Messobjekt
- 8: Detektionslochblende
- 8a: Detektionsfaser
- 9: eindimensionale Detektoreinheit
- 9a, 9b, 9c: den einzelnen Segmenten zugeordnete Wellenlängenbereiche
- 10: hyperchromatisches Objektiv eines chromatisch-konfokalen Punktsensors
- 11: diffraktives Element mit zusätzlich aufgeprägten linearen Phasen
- 11a, 11b, 11c: einzelne Segmente
- 12a, 12b, 12c: räumlich getrennte Messpunkte

## Patentansprüche

1. Verfahren zur chromatisch-konfokalen Mehrpunktmessung mit Farbaufspaltung in Ausbreitungsrichtung des Beleuchtungslichtes basierend auf einer punktweisen chromatisch-konfokalen Abstandsmessung, **dadurch gekennzeichnet, dass** die chromatisch kodierten Messwerte mehrerer senkrecht zur Ausbreitungsrichtung lateral beabstandeter Messpunkte, bei denen eine Referenzwellenlänge λ₀ jeweils in unterschiedlichen axialen Abständen zu einem Sensor fokussiert wird, mit einem spektralen Multiplexverfahren an eine Detektoreinheit übertragen werden, wobei jedem Messpunkt ein spektrales Teilband der gesamten spektralen Bandbreite des Beleuchtungslichts und eine jeweils andere Brennweite zugeordnet sind, und wobei in dem spektralen Multiplexverfahren die den mehreren Messpunkten zugeordneten spektralen Teilbänder gleichzeitig über einen einzelnen breitbandigen optischen Kanal zur Detektionseinheit übertragen werden.

2. Verfahren nach Anspruch 1, **dadurch gekennzeichnet, dass** eine breitbandige elektromagnetische Strahlung im sichtbaren, im UV- oder IR-Bereich verwendet wird.

3. Verfahren nach einem der Ansprüche 1 oder 2, **dadurch gekennzeichnet, dass** beim zusätzlichen spektralen Multiplexverfahren die chromatisch codierten Messwerte verschiedener Messpunkte mittels geometrischer oder physikalischer Strahlkombinationsverfahren zusammengeführt werden.

4. Verfahren nach Anspruch 3, **dadurch gekennzeichnet, dass** die geometrischen oder physikalischen Strahlenkombinationsverfahren wellenlängenselektiv realisiert werden.

5. Vorrichtung, die zur chromatisch-konfokalen Mehrpunktmessung mit primärer Farbaufspaltung in Ausbreitungsrichtung des Beleuchtungslichtes basierend auf einer punktweisen chromatisch-konfokalen Abstandsmessung eingerichtet ist, wobei die Vorrichtung eingerichtet ist, chromatisch kodierte Messwerte mehrerer Messpunkte mit einem spektralen Multiplexverfahren an eine Detektoreinheit zu übertragen, wobei in den mehreren Messpunkten eine Referenzwellenlänge λ₀ jeweils in unterschiedlichen axialen Abständen zu einem Sensor fokussiert wird, wobei die Vorrichtung mindestens eine spektral breitbandige Strahlungsquelle (1), eine Beleuchtungslochblende (2), ein optisches Element (6), mindestens eine Detektionslochblende (8), mindestens ein hyperchromatisches optisches System (5) und mindestens eine Detektoreinheit (9) aufweist, **dadurch gekennzeichnet, dass** das optische Element (6) im Strahlengang der breitbandigen elektromagnetischen Strahlung angeordnet ist und für die chromatische Kodierung und das spektrale Multiplexen einzelner zeitgleich erfasster Messpunkte einen Wellenlängenversatz bewirkt, wobei das optische Element (6) eine Mehrzahl einzelner Segmente (6a, 6b, 6c) umfasst, die unterschiedlichen Messpunkten zugeordnet sind und die unterschiedliche Brennweiten aufweisen und wobei in dem spektralen Multiplexverfahren die den mehreren Messpunkten zugeordneten spektralen Teilbänder gleichzeitig über einen einzelnen breitbandigen optischen Kanal zur Detektionseinheit übertragen werden.

6. Vorrichtung nach Anspruch 5, **dadurch gekennzeichnet, dass** die wellenlängenselektiven geometrischen oder physikalischen Strahlenkombinationsverfahren mit einem dichroitischen Spiegel, Tief-, Band- und / oder Hochpassfilter realisierbar sind.

7. Vorrichtung nach einem der Ansprüche 5 bis 6, **dadurch gekennzeichnet, dass** die Beleuchtungs- und Detektionslochblende Lichtleitfasern (2a), (8a) sind und mittels eines Faserkopplers (3a) als kombinierte Beleuchtungs-Detektionslochblende (4) ausgeführt sind.

8. Vorrichtung nach einem der Ansprüche 5 bis 7, **dadurch gekennzeichnet, dass** zusätzlich ein segmentiertes wellenlängenselektives Filterelement im Strahlengang der breitbandigen elektromagnetischen Strahlung angeordnet ist.

9. Vorrichtung nach einem der Ansprüche 5 bis 8, **dadurch gekennzeichnet, dass** im Strahlengang der breitbandigen elektromagnetischen Strahlung eines chromatisch-konfokalen Punktsensors ein segmentiertes diffraktives Element mit zusätzlich aufgeprägten linearen Phasen (11) angeordnet ist.

10. Verwendung mehrerer Vorrichtungen nach einem der Ansprüche 5 bis 9 in einem optischen Sensor, wobei jede einzelne Vorrichtung nach einem der Ansprüche 5 bis 9 gleichzeitig mehrere Messpunkte mit Hilfe des Verfahrens nach einem der Ansprüche 1 bis 4 erfasst.

## Claims

1. Method for chromatic confocal multipoint measurement with colour splitting in the propagation direction of the illumination light based on a point-wise chromatic confocal distance measurement, **characterized in that** the chromatically coded measurement values of a plurality of measurement points, which are laterally spaced apart perpendicularly to the propagation direction and in which a reference wavelength λ₀ is focused in each case at different axial distances from a sensor, are transmitted to a detector unit with a spectral multiplexing method, wherein each measurement point is assigned a spectral partial band of the entire spectral bandwidth of the illumination light and a respectively different focal length, and wherein, in the spectral multiplexing method, the spectral partial bands that are assigned to the plurality of measurement points are transmitted simultaneously to the detection unit via an individual broadband optical channel.

2. Method according to Claim 1, **characterized in that** broadband electromagnetic radiation in the visible, in the UV or IR range is used.

3. Method according to either of Claims 1 and 2, **characterized in that,** in the additional spectral multiplexing method, the chromatically coded measurement values of different measurement points are combined by means of geometric or physical beam combination methods.

4. Method according to Claim 3, **characterized in that** the geometric or physical beam combination methods are realized in a wavelength-selective manner.

5. Device configured for chromatic confocal multipoint measurement with primary colour splitting in the propagation direction of the illumination light based on a point-wise chromatic confocal distance measurement, wherein the device is configured to transmit chromatically coded measurement values of a plurality of measurement points to a detector unit with a spectral multiplexing method, wherein a reference wavelength λ₀ is focused in each case at different axial distances from a sensor in the plurality of measurement points, wherein the device has at least one spectrally broadband radiation source (1), an illumination pinhole stop (2), an optical element (6), at least one detection pinhole stop (8), at least one hyperchromatic optical system (5) and at least one detector unit (9), **characterized in that** the optical element (6) is arranged in the beam path of the broadband electromagnetic radiation and brings about a wavelength shift for the chromatic coding and the spectral multiplexing of individual, simultaneously captured measurement points, wherein the optical element (6) comprises a plurality of individual segments (6a, 6b, 6c), which are assigned to different measurement points and which have different focal lengths, and wherein, in the spectral multiplexing method, the spectral partial bands that are assigned to the plurality of measurement points are transmitted simultaneously to the detection unit via an individual broadband optical channel.

6. Device according to Claim 5, **characterized in that** the wavelength-selective geometric or physical beam combination methods are realizable with a dichroic mirror, low-pass, band-pass and/or high-pass filter.

7. Device according to either of Claims 5 and 6, **characterized in that** the illumination and detection pinhole stops are light-guiding fibres (2a), (8a) and are designed, by means of a fibre coupler (3a), as a combined illumination-detection pinhole stop (4).

8. Device according to one of Claims 5 to 7, **characterized in that** a segmented wavelength-selective filter element is additionally arranged in the beam path of the broadband electromagnetic radiation.

9. Device according to one of Claims 5 to 8, **characterized in that** a segmented diffractive element with additionally imprinted linear phases (11) is arranged in the beam path of the broadband electromagnetic radiation of a chromatic confocal point sensor.

10. Use of a plurality of devices according to one of Claims 5 to 9 in an optical sensor, wherein each individual device according to one of Claims 5 to 9 simultaneously captures a plurality of measurement points with the aid of the method according to one of Claims 1 to 4.

## Revendications

1. Procédé de mesure multipoint confocale chromatique avec une dispersion de couleurs dans la direction de propagation de la lumière d'éclairage sur la base d'une mesure de distance confocale chromatique point par point,
**caractérisé en ce que** les valeurs de mesure codées chromatiquement de plusieurs points de mesure espacés latéralement, perpendiculairement à la direction de propagation, où une longueur d'onde de référence λ₀ est respectivement focalisée à différentes distances axiales par rapport à un capteur, sont transmises à une unité de détection par un procédé de multiplexage spectral, chaque point de mesure étant associé à une sous-bande spectrale de la largeur de bande spectrale totale de la lumière d'éclairage et à une distance focale respectivement différente, et dans lequel, dans le procédé de multiplexage spectral, les sous-bandes spectrales associées aux plusieurs points de mesure sont transmises à l'unité de détection en même temps sur un seul canal optique à large bande.

2. Procédé selon la revendication 1, **caractérisé en ce qu'**un rayonnement électromagnétique à large bande est utilisé dans le domaine visible, dans le domaine UV ou dans le domaine IR.

3. Procédé selon l'une quelconque des revendications 1 et 2, **caractérisé en ce que** dans le procédé de multiplexage spectral supplémentaire, les valeurs de mesure codées chromatiquement de différents points de mesure sont réunies au moyen de procédés de combinaison de rayons géométriques ou physiques.

4. Procédé selon la revendication 3, **caractérisé en ce que** les procédés de combinaison de rayons géométriques ou physiques sont réalisés de manière sélective en longueur d'onde.

5. Dispositif, qui est aménagé pour la mesure multipoint confocale chromatique avec une dispersion de couleurs primaire dans la direction de propagation de la lumière d'éclairage sur la base d'une mesure de distance confocale chromatique point par point, le dispositif étant aménagé pour transmettre à une unité de détection par un procédé de multiplexage spectral des valeurs de mesure codées chromatiquement de plusieurs points de mesure, dans lequel, aux plusieurs points de mesure, une longueur d'onde de référence λ₀ est focalisée respectivement à différentes distances axiales par rapport à un capteur, le dispositif présentant au moins une source de rayonnement (1) à large bande spectrale, un diaphragme à trou d'éclairage (2), un élément optique (6), au moins un diaphragme à trou de détection (8), au moins un système optique hyperchromatique (5) et au moins une unité de détection (9),
**caractérisé en ce que** l'élément optique (6) est disposé sur la trajectoire des rayons du rayonnement électromagnétique à large bande et provoque un décalage de longueur d'onde pour le codage chromatique et le multiplexage spectral de points de mesure individuels détectés en même temps, l'élément optique (6) comprenant une pluralité de segments individuels (6a, 6b, 6c) qui sont attribués à différents points de mesure et qui présentent différentes distances focales, et dans lequel, dans le procédé de multiplexage spectral, les sous-bandes spectrales associées aux plusieurs points de mesure sont transmises en même temps à l'unité de détection sur un seul canal optique à large bande.

6. Dispositif selon la revendication 5, **caractérisé en ce que** les procédés de combinaison de rayons géométriques ou physiques, sélectifs en longueur d'onde, sont réalisables avec un miroir dichroïque, un filtre passe-bas, un filtre passe-bande et/ou un filtre passe-haut.

7. Dispositif selon l'une quelconque des revendications 5 à 6, **caractérisé en ce que** le diaphragme à trou d'éclairage et le diaphragme à trou de détection sont des fibres optiques (2a), (8a) et sont réalisés au moyen d'un coupleur de fibres optiques (3a) comme un diaphragme à trou d'éclairage et de détection (4) combiné.

8. Dispositif selon l'une quelconque des revendications 5 à 7, **caractérisé en ce qu'**en plus, un élément de filtre segmenté, sélectif en longueur d'onde, est disposé sur la trajectoire des rayons du rayonnement électromagnétique à large bande.

9. Dispositif selon l'une quelconque des revendications 5 à 8, **caractérisé en ce qu'**un élément diffractif segmenté avec des phases linéaires (11) imposées en plus est disposé sur la trajectoire des rayons du rayonnement électromagnétique à large bande d'un capteur ponctuel confocal chromatique.

10. Utilisation de plusieurs dispositifs selon l'une quelconque des revendications 5 à 9 dans un capteur optique, chaque dispositif individuel selon l'une quelconque des revendications 5 à 9 détectant en même temps plusieurs points de mesure à l'aide du procédé selon l'une quelconque des revendications 1 à 4.
